# DEMANDE DE BREVET EUROPEEN

(11) **EP 1 460 328 A1**
(43) Date de publication de la demande: **22.09.2004**
(21) Numéro de dépôt: 03447053.4
(22) Date de dépôt: 17.03.2003
(51) Int. Cl.: F16L 39/00, F16L 37/56, F16L 55/10

(54) **Dispositif de raccordement multiconnecteur**

(71) Demandeur: Vesuvius Group S.A, 7011 Ghlin (BE)
(72) Inventeur: Collura, Mariano, 7110 Strépy-Bracquegnies (BE); Boisdequin, Vincent, 7062 Naast (BE)
(74) Mandataire: Debled, Thierry

(57) **Abrégé**

L'invention concerne un dispositif de raccordement multiconnecteur pour établir au moins une circulation de fluide, comprenant deux supports (6,7) portant des éléments de connecteurs dont au moins des éléments d'un connecteur pour fluide, aptes à être rapprochés l'un de l'autre pour accoupler simultanément tous les éléments de connecteurs, et des moyens de verrouillage pour maintenir les deux supports rapprochés l'un de l'autre, caractérisé en ce qu'il comporte :
- un détecteur de tentative d'écartement des supports,
- un actionneur déclenchable par le détecteur et apte à désactiver le moyen de verrouillage pour autoriser l'écartement des deux supports.

## Description

L'invention concerne un dispositif de raccordement multiconnecteur pour établir au moins une circulation de fluide, notamment pour réaliser des connexions hydrauliques et éventuellement électriques, et un tel dispositif de raccordement connecté à un récipient de coulée.

Pour connecter rapidement plusieurs conduits hydrauliques, par exemple pour raccorder un équipement mobile à des alimentations hydrauliques ou à des armoires de commande, il est connu d'utiliser un dispositif de raccordement multiconnecteur, comprenant deux supports d'éléments de connecteurs dans lesquels des éléments de connecteur sont disposés les uns à côté des autres avec leurs axes d'accouplement tous parallèles à une unique direction, selon laquelle les deux supports doivent être rapprochés l'un de l'autre pour réaliser simultanément toutes les connexions.

Suivant leur nature, les éléments de connecteurs peuvent comporter des organes élastiques, par exemple des moyens d'encliquetage verrouillant leur accouplement, ou encore des valves assurant leur obturation à l'état désaccouplé, et ces organes élastiques opposent des forces résistantes lors de l'accouplement de chaque paire d'éléments de connecteurs, de sorte que le rapprochement des deux supports nécessite la fourniture d'un effort supérieur à la résultante de toutes les forces résistantes cumulées. Cet effort peut être très important.

C'est pourquoi un mécanisme de serrage doit être prévu sur le dispositif de raccordement, pour rapprocher les deux supports et accoupler simultanément tous les éléments de connecteurs individuels. Un tel mécanisme de serrage peut par exemple être une came.

Une fois ce rapprochement opéré, un moyen de verrouillage maintient les deux supports en position rapprochée. En raison de la présence de fluide hydraulique, ce moyen de verrouillage doit résister à une force tendant à séparer les deux supports du dispositif lorsque le fluide est sous pression, du fait de la pression hydraulique qui s'exerce à l'intérieur de chaque paire d'éléments de connecteur.

De tels dispositifs donnent satisfaction en ce qu'ils permettent de réaliser rapidement la connexion d'un grand nombre de conduits hydrauliques et électriques.

Une difficulté se pose cependant quant à leur utilisation dans des applications dans lesquelles il existe un risque d'arrachage des conduits. Par exemple, en sidérurgie, lorsqu'une poche de coulée arrive au dessus de son lieu de vidange, on raccorde simultanément plusieurs conduits hydrauliques et électriques au dispositif prévu sous la poche pour réguler l'écoulement de l'acier fondu.

Une fois la poche vidée, on débranche tous les connecteurs en écartant les deux supports du dispositif de raccordement et on éloigne la poche de coulée pour en positionner une nouvelle.

Mais il peut se produire que l'éloignement de la poche s'impose d'urgence, par exemple en cas de disfonctionnement de son dispositif de régulation.

Dans ce cas, les connecteurs demeurent branchés car le déplacement de la poche ne peut pas être retardé. Il en résulte une détérioration de matériel, par exemple une destruction d'un support ou un arrachage des conduits.

La présente invention vise à proposer une solution pour éviter cette détérioration.

De façon plus précise, l'invention a pour objet un dispositif de raccordement multiconnecteur pour établir au moins une circulation de fluide, comprenant deux supports portant des éléments de connecteurs, dont au moins deux éléments complémentaires d'un connecteur pour fluide, les deux supports étant aptes à être rapprochés l'un de l'autre pour accoupler simultanément tous les éléments de connecteurs, et des moyens de verrouillage pour maintenir les deux supports rapprochés l'un de l'autre. Ce dispositif est caractérisé en ce qu'il comporte :
- un détecteur de tentative d'écartement des supports,
- un actionneur déclenchable par le détecteur et apte à désactiver les moyens de verrouillage pour autoriser l'écartement des deux supports.

Grâce à l'invention, le dispositif de raccordement ne risque pas de subir un arrachement car le détecteur de tentative d'écartement anticipe le besoin de déconnexion et provoque le déverrouillage des supports, lesquels peuvent ainsi se séparer.

Le détecteur de tentative d'écartement peut être sensible à différentes grandeurs. En particulier, si des conduits souples sont reliés au dispositif, le détecteur peut détecter une tentative d'éloignement d'une portion de ces conduits, cette portion pouvant d'ailleurs être une de leurs extrémités. Dans la suite de la description, on appelle « portion surveillée » cette portion des conduits dont le détecteur détecte une tentative d'éloignement.

Dans un premier mode de réalisation, le dispositif comprend en outre un câble de traction ayant une première extrémité fixée à la portion surveillée des conduits et une seconde extrémité fixée au détecteur. Lorsque les conduits commencent à se tendre, leur portion surveillée s'éloigne du dispositif de raccordement et le câble finit par se mettre en traction. En choisissant comme longueur du câble la distance entre la portion surveillée et l'actionneur à partir de laquelle on estime que le dispositif de raccordement doit déconnecter les éléments de connecteur, on obtient le résultat souhaité, à savoir que le câble tendu agit sur le détecteur qui déclenche l'actionneur.

Le détecteur de tentative d'écartement peut aussi être directement sensible à la traction exercée sur le ou certains des conduits, souples ou rigides, raccordés au dispositif de raccordement. Aucun câble n'est alors nécessaire.

Dans ce mode de réalisation, il peut être avantageux de prévoir un seuil de traction en dessous duquel l'actionneur ne doit pas réagir, afin que des tractions admissibles pour le dispositif de raccordement ne provoquent pas de déconnexion inutile. Un tarage du détecteur peut fixer ce seuil de traction.

Le détecteur peut par exemple être un dynamomètre, relié au câble le cas échéant, sinon aux conduits, qui ne déclenche l'actionneur qu'à partir d'un certain seuil de traction des conduits.

Dans un autre mode de réalisation, le détecteur, sensible à l'éloignement de la portion surveillée des conduits, comprend des moyens électroniques aptes à vérifier la présence de la portion surveillée dans un environnement proche de l'actionneur ou du dispositif de raccordement. Si la portion surveillée quitte cet environnement, la déconnexion est déclenchée.

Dans une autre variante, le détecteur, l'actionneur et les moyens de verrouillage sont confondus dans un même organe qui maintient les deux supports rapprochés et, à partir d'un seuil de traction des conduits, libère les deux supports et déconnecte les éléments de connecteurs.

Le dispositif selon l'invention présente d'autres caractéristiques avantageuses qui peuvent être considérées isolément ou en combinaison avec d'autres :
- Le dispositif comporte un mécanisme de serrage pour rapprocher les deux supports et accoupler simultanément tous les éléments de connecteurs individuels;
- Si le mécanisme de serrage est une came, le moyen de verrouillage est obtenu par une configuration particulière de la surface de came, réalisant un point dur à proximité de sa position de fin de course;
- Le dispositif comporte un mécanisme d'écartement pour écarter les deux supports en cas de déconnexion et l'actionneur agit sur le mécanisme d'écartement. Cette caractéristique est avantageuse si les supports comprennent des moyens de guidage qui assurent leur alignement lors de leur rapprochement pour la connexion, car ces moyens de guidage requièrent une course plus longue que celle des éléments de connecteurs et pourraient se déformer lors d'une séparation brutale des deux supports;
- Le moyen de serrage est aussi le mécanisme d'écartement;
- L'actionneur comprend un moyen d'accumulation d'énergie qui lui permet d'agir sur le moyen d'écartement ou de fournir au moyen d'écartement l'énergie nécessaire à la séparation des supports.
- L'actionneur est mécanique, hydraulique, pneumatique ou électrique.
- L'actionneur est placé sur l'un des deux supports ou est isolé, selon la configuration choisie par l'utilisateur. Sur un des supports, le dispositif peut être plus compact et plus simple à installer. Séparé, le dispositif peut être plus facile à réaliser à partir d'un dispositif de raccordement de l'état de la technique.

L'invention s'applique notamment aux raccordements hydrauliques et électriques des récipients de coulée en sidérurgie et a aussi pour objet un dispositif de régulation pour jet d'acier d'un récipient de coulée, muni d'un dispositif de raccordement tel que décrit ci-dessus.

Afin de faciliter la compréhension de l'invention, on va maintenant en décrire des exemples de réalisation, en référence aux dessins schématiques annexés, dans lesquels :
- la figure 1 est une vue en perspective d'une poche de coulée positionnée au-dessus d'un répartiteur,
- la figure 2 est analogue à la figure 1 et montre la poche de coulée en cours d'éloignement du répartiteur,
- la figure 3 est analogue à la figure 2 et montre la poche de coulée encore plus éloignée du répartiteur,
- les figures 4, 5 et 6 sont aussi des vues en perspective, à trois instants successifs, du répartiteur placé au-dessus d'une lingotière.
- les figures 7, 8 et 9 sont aussi des vues en perspective, à trois instants successifs, d'une poche de coulée et d'un tourniquet de coulée continue.

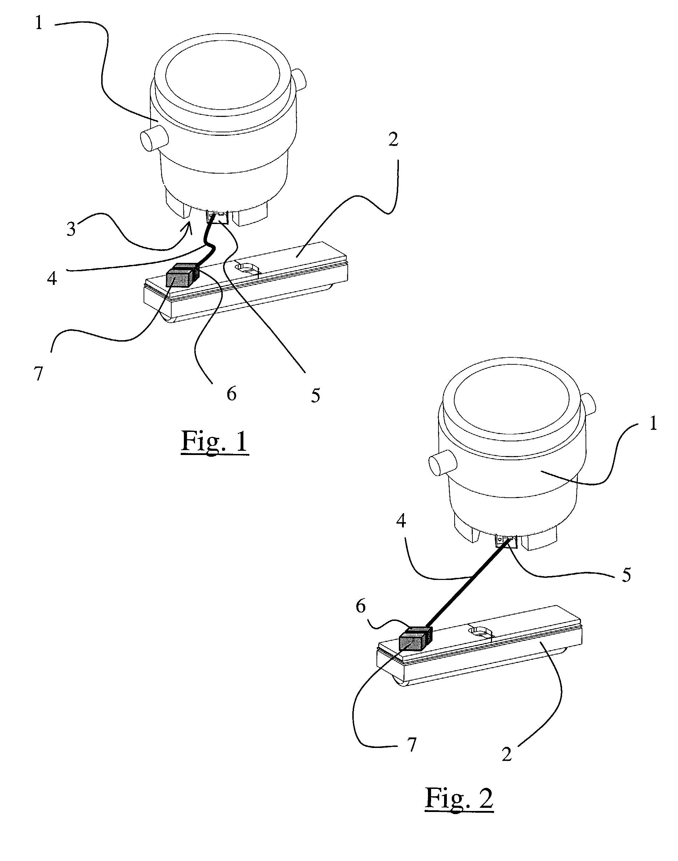

Sur la figure 1, on a représenté une poche de coulée 1 qui est suspendue, par un dispositif non représenté, au-dessus d'un répartiteur 2. La poche comporte à sa partie inférieure un dispositif de régulation, globalement désigné par la référence 3, qui est commandé par des moyens hydrauliques et électriques (non représentés) raccordés au dispositif de régulation 3 par un faisceau 4 de conduits souples, incluant un conduit hydraulique et plusieurs câbles électriques, allant d'une boîte de raccordement 5 du dispositif de régulation à un support 6 d'un dispositif de raccordement comprenant ce premier support 6 et un second support 7.

Les deux supports 6 et 7 forment un dispositif de raccordement multiconnecteur, en portant chacun une pluralité d'éléments de connecteurs qui s'accouplent simultanément lorsque les deux supports sont rapprochés l'un de l'autre.

Le premier support 6 est libre par rapport au répartiteur 2, tandis que le second support 7 est fixé au répartiteur 2. Des moyens de verrouillage (non représentés) maintiennent les deux supports rapprochés l'un de l'autre.

Un détecteur de tentative d'écartement des supports est prévu dans le dispositif de raccordement, mû par un câble de traction qui est incorporé au faisceau de conduits et de câbles.

Lorsque, comme on le voit sur la figure 2, la poche de coulée est éloignée du répartiteur, le câble de traction, qui est légèrement plus court que le conduit hydraulique et les câbles électriques constituant le faisceau, se tend le premier et rend le faisceau 4 apparemment rectiligne, tout en soustrayant le conduit hydraulique et les câbles électriques à la traction.

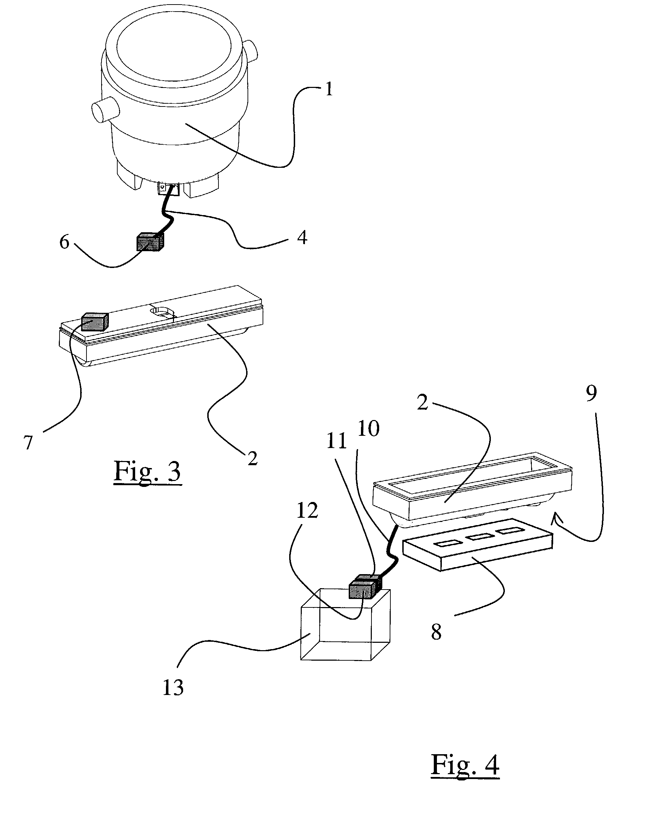

Dans l'exemple décrit, l'extrémité du faisceau reliée au boîtier de raccordement 5 est la portion surveillée des conduits et câbles à laquelle le câble de traction est relié. L'autre extrémité du câble de traction est reliée à un actionneur (non représenté) incorporé au premier support et déclenché par la mise en tension du câble de traction, pour désactiver le moyen de verrouillage et autoriser le désaccouplement des deux supports 6, 7, comme on le voit sur la figure 3.

L'homme du métier saura déterminer le type d'actionneur à utiliser en fonction du résultat souhaité. Il peut s'agir d'un organe unique constituant à la fois le détecteur, l'actionneur et les moyens de verrouillage, apte à maintenir les deux supports 6, 7 rapprochés et, à partir d'un seuil de traction supporté par le câble de traction, à libérer les deux supports pour désaccoupler leurs éléments de connecteur.

Dans une autre variante, le faisceau de câble 4 ne contient pas de câble de traction et le conduit hydraulique et/ou les câbles électriques constituent ensemble un élément de traction agissant sur le détecteur présent dans le premier support 6.

Dans ce cas, il est avantageux que le détecteur soit taré pour que la libération des deux supports se produise au-dessus d'un seuil de traction prédéterminé et que ce seuil soit inférieur à la tenue en traction du conduit hydraulique et des câbles électriques, afin de ne pas les endommager.

Dans une autre variante, le détecteur est constitué par des moyens électroniques aptes à vérifier la présence du boîtier de raccordement 5 dans un environnement proche du premier support 6, par exemple sous la forme d'un émetteur-récepteur radio logé dans le premier support 6 et d'un transpondeur logé dans le boîtier de raccordement 5, qui répond à des signaux émis par l'émetteur-récepteur lorsqu'il est placé dans son champ d'émission.

Quel que soit le mode de réalisation retenu, il est avantageux de prévoir un seuil de traction minimal en dessous duquel l'actionneur ne réagit pas, afin de pouvoir manoeuvrer la poche de coulée en tirant légèrement et involontairement sur le faisceau 4, sans déclencher la séparation des deux supports 6 et 7.

Pour réaliser la fonction d'actionneur ayant un seuil minimal et seuil maximal, on peut avantageusement utiliser un dynamomètre, directement relié au faisceau 4.

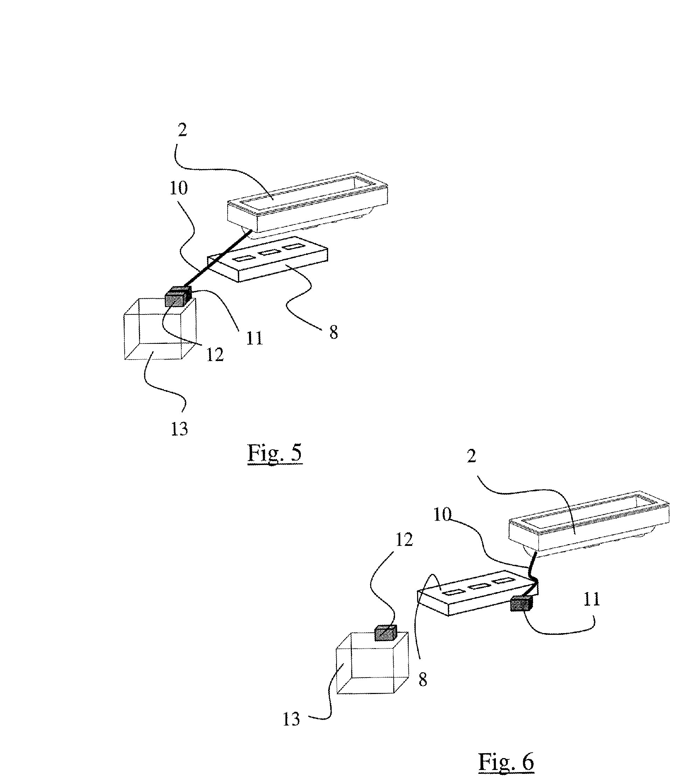

Dans le mode de réalisation des figures 4 à 6, l'élément mobile n'est plus une poche de coulée mais le répartiteur 2 précédemment décrit.

Ce répartiteur est présenté au-dessus d'une lingotière 8 et la commande de son dispositif de régulation 9 s'effectue par des moyens hydrauliques et électriques (non représentés).

A cet effet, un faisceau de câbles électriques et des trois conduits hydrauliques 10 est raccordé au moyen de régulation 9 et aboutit au premier support 11 d'un dispositif de raccordement multiconnecteur comprenant un second support 12.

Le second support 12 est porté par un bâti 13 solidaire de la lingotière 8, tandis que le premier support 11 est libre par rapport à ce bâti.

Le fonctionnement du dispositif de raccordement est le même que précédemment : lorsque le répartiteur 2 doit être éloigné d'urgence des lingotières 8, un détecteur de tentative d'écartement déclenche un actionneur qui désactive le moyen de verrouillage maintenant les deux supports rapprochés l'un de l'autre, ce qui autorise l'écartement des deux supports.

Dans ce mode de réalisation, l'accouplement des éléments de connecteur des deux supports est mécaniquement difficile à réaliser en raison de la présence de trois éléments de connecteur pour fluide hydraulique dans chaque support. Le dispositif comprend, de ce fait, un mécanisme de rapprochement et d'écartement qui fournit l'énergie nécessaire au rapprochement des deux supports, lors de leur accouplement, et à leur écartement en cas de déconnexion. Ce mécanisme peut être constitué par exemple par un levier à came.

L'actionneur, qui est prévu sur le dispositif de raccordement pour autoriser l'écartement des deux supports, agit alors également sur le mécanisme d'écartement, de sorte qu'après libération des deux supports l'un par rapport à l'autre, la traction qui doit être exercée sur le support 11 pour désaccoupler tous les éléments de connecteur est fournie par le mécanisme d'écartement et non par le faisceau 10.

Le mécanisme d'écartement est actionné par l'actionneur qui peut être à cet effet motorisé ou pourvu d'un moyen d'accumulation d'énergie.

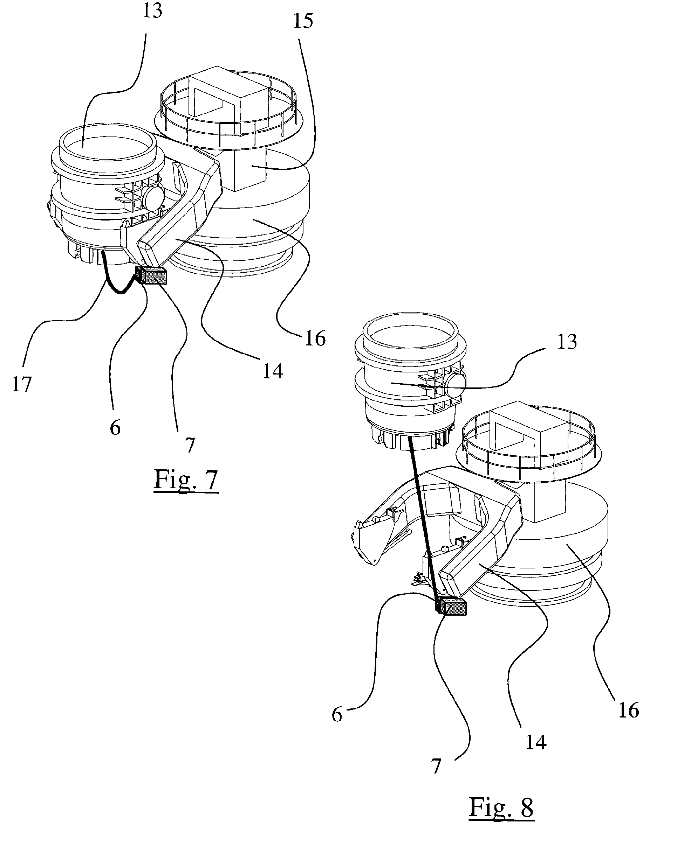

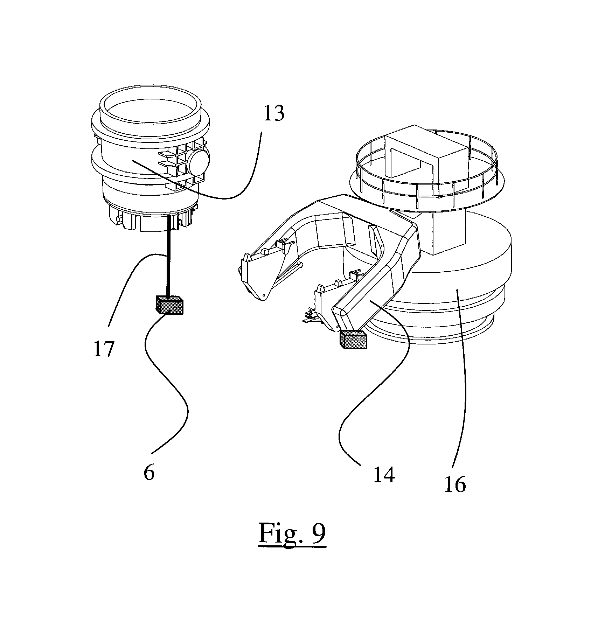

Dans le mode de réalisation des figures 7 à 9, la poche de coulée 13 est portée par les bras 14 d'un tourniquet de coulée continue 15 monté sur son bâti pivotant 16.

Un dispositif de raccordement multiconnecteur, semblable à celui du premier mode de réalisation des figures 1 à 3, est constitué par deux supports 6 et 7, le premier support 6 étant libre à l'extrémité d'un faisceau 17 (constitué par au moins un conduit hydraulique et des câbles électriques) et le second support 7 étant monté fixe sur l'un des bras 14.

Comme expliqué précédemment, lorsque la poche de coulée doit être éloignée d'urgence de son emplacement de vidage, la séparation des deux supports 6 et 7 est déclenchée automatiquement avant que le faisceau ou tout autre élément des circuits hydrauliques et électriques ne soient détériorés.

Il est bien entendu que les modes de réalisations décrits ci-dessus ne présentent aucun caractère limitatif et qu'ils pourront recevoir toutes modifications souhaitables sans sortir pour cela du cadre défini par les revendications annexées.

## Revendications

1. Dispositif de raccordement multiconnecteur pour établir au moins une circulation de fluide, comprenant deux supports (6,7 ;11,12) portant des éléments de connecteurs dont au moins des éléments d'un connecteur pour fluide, aptes à être rapprochés l'un de l'autre pour accoupler simultanément tous les éléments de connecteurs, et des moyens de verrouillage pour maintenir les deux supports rapprochés l'un de l'autre, **caractérisé en ce qu'**il comporte :
- un détecteur de tentative d'écartement des supports,
- un actionneur déclenchable par le détecteur et apte à désactiver le moyen de verrouillage pour autoriser l'écartement des deux supports.

2. Dispositif selon la revendication 1, dans lequel des conduits souples (4 ;10 ;17) sont reliés au dispositif et le détecteur détecte un éloignement d'une portion de ces conduits.

3. Dispositif selon la revendication 2, comprenant en outre un câble de traction ayant une première extrémité fixée à la portion surveillée des conduits et une seconde extrémité fixée au détecteur.

4. Dispositif selon la revendication 1, dans lequel le détecteur est un dynamomètre.

5. Dispositif selon l'une des revendications 3 et 4, agencé de manière qu'en dessous d'un seuil de traction, l'actionneur ne réagit pas.

6. Dispositif selon la revendication 5, dans lequel le détecteur est taré pour fixer le seuil de traction.

7. Dispositif selon la revendication 2, dans lequel le détecteur comprend des moyens électroniques aptes à vérifier la présence de la portion des conduits dans un environnement proche de l'actionneur ou du dispositif de raccordement.

8. Dispositif selon la revendication 1, dans lequel le détecteur, l'actionneur et les moyens de verrouillage sont confondus dans un même organe qui maintient les deux supports rapprochés et, à partir d'un seuil de traction des conduits, libère les deux supports et déconnecte les éléments de connecteurs.

9. Dispositif selon l'une des revendications 1 à 8, comportant un mécanisme d'écartement pour écarter les deux supports en cas de déconnexion, dans lequel l'actionneur agit aussi sur le mécanisme d'écartement.

10. Dispositif selon la revendication 9, dans lequel le mécanisme d'écartement sert aussi à rapprocher les deux supports pour accoupler simultanément tous les éléments de connecteurs.

11. Dispositif selon l'une des revendications 9 et 10, dans lequel l'actionneur comprend un moyen d'accumulation d'énergie qui lui permet d'agir sur le moyen d'écartement ou de fournir au moyen d'écartement l'énergie nécessaire à la séparation des supports.

12. Dispositif selon l'une des revendications 1 à 11, dans lequel l'actionneur est mécanique, hydraulique, pneumatique ou électrique.

13. Dispositif selon l'une des revendications 1 à 12, dans lequel le détecteur est mécanique, hydraulique, pneumatique ou électrique.
